# EUROPÄISCHE PATENTSCHRIFT

(11) **EP 1 145 923 B1**
(45) Veröffentlichungstag und Bekanntmachung des Hinweises auf die Patenterteilung: **07.01.2009**
(21) Anmeldenummer: 01109012.3
(22) Anmeldetag: 11.04.2001
(51) Int. Cl.: B60R 21/20

(54) **Instrumententafel für ein Kraftfahrzeug und Verfahren zu deren Herstellung**
Dashboard for a motor vehicle and its method of production
Tableau de bord pour véhicule automobile et procédé de sa production

(30) Priorität: 14.04.2000 DE 10018893
(43) Veröffentlichungstag der Anmeldung: 17.10.2001
(73) Patentinhaber: ACTS-Advanced Car Technology Systems GmbH & Co.KG, 63877 Sailauf (DE); Adam Opel Aktiengesellschaft, 65428 Rüsselsheim (DE)
(72) Erfinder: Schmidt, Werner, 63755 Alzenau (DE); Rick, Ulrich, 55595 Roxheim (DE); Wagner, Udo, 65428 Rüsselsheim (DE); Lösekamm, Denis, 63741 Aschaffenburg (DE)
(74) Vertreter: Völger, Silke Beatrix

(56) Entgegenhaltungen:
- EP-A- 0 520 537
- EP-A- 0 739 787
- DE-A- 19 623 579
- DE-A- 19 648 138
- GB-A- 2 294 431
- US-A- 5 096 220
- US-A- 5 393 089
- US-A- 5 564 731

## Beschreibung

Die Erfindung betrifft eine Instrumententafel für ein Kraftfahrzeug, aus einem formstabilen Kunststoffträger, einer Deckschicht sowie gegebenenfalls einer Schicht aus Schaumstoff oder dergleichen, mit zumindest einem klappenartig aufreißbaren Teil für den Airbag eines Airbagmoduls, wobei das klappenartig aufreißbare Teil durch Aufreißlinien und einen Scharnierbereich definiert ist und mit einer Verstärkung versehen ist, wobei die Verstärkung aus zumindest einer durchbrochen ausgeführten Lage besteht.

Es ist weit verbreitet, in Instrumententafeln für den Beifahrerairbag zumindest eine Klappe für den Durchtritt des in einer entsprechenden Situation sich auslösenden Airbags vorzusehen. U-förmig verlaufende Aufreißlinien bilden dabei üblicherweise eine einzige Klappe, durch H-förmig verlaufende Aufreißlinien werden zwei Klappen gebildet. Die beim Aufreißen der Klappe(n) wirkenden Kräfte sind sehr groß, so dass gegebenenfalls während des Aufreißens der Klappen vom Träger harte Bruchstückchen absplittern können, die in den Fahrgastraum geschleudert werden und eine Verletzungsgefahr für den Beifahrer darstellen. Um ein Ablösen solcher Bruchstücke zu verhindern, ist bereits vorgeschlagen worden, die Klappen bzw. die Instrumententafel zu verstärken. So ist beispielsweise in der DE-A-196 48 138 vorgesehen, zu beiden Seiten der Aufreißlinien an der Außenseite des Trägers ein Armierungsgewebe anzukleben. Als eine alternative Ausführung ist vorgesehen, auf der Unterseite der Deckschicht beidseitig der Aufreißlinien ein Gewebe anzubringen, welches in die unter der Deckschicht verlaufende Schaumstoffschicht eingebettet ist. Dabei kann bei dieser Ausführungsform ein Absplittern und Wegschleudern von Bruchstücken aus dem Träger nicht verhindert werden. Diesbezüglich wäre das Anbringen der Armierung an der Außenseite des Trägers wirkungsvoller. Bei an der Trägeraußenseite angebrachten Verstärkungen kann es jedoch vorkommen, dass sich diese durch die hohen Kräfte, die mit dem Auslösen eines Airbags verbunden sind und auch erforderlich sind, zum Teil ablösen, so dass sie ihren Zweck nicht oder nur ungenügend erfüllen können.

Eine gattungsgemäße Instrumententafel ist aus der GB-A 2294431 bekannt. Dort ist eine Lochblechplatte als Verstärkung vorgesehen, in deren Öffnungen das Trägermaterial nach einem Pressvorgang eingepresst liegt. Das Dokument US 5096220 offenbart ein vollständig in das Kunststoffmaterial des Trägers eingebettetes Netz.

Hier setzt nun die Erfindung ein, der die Aufgabe zu Grunde liegt, eine Instrumententafel im Bereich des oder der klappenartig aufreißbaren Teile so zu verstärken, dass ein Ablösen von Träger-Bruchstücken wirkungsvoll verhindert wird.

Gelöst wird die gestellte Aufgabe erfindungsgemäß dadurch, dass die Verstärkung aus zumindest einer durchbrochen ausgeführten und flexiblen Lage besteht, welche vom eingespritzten Kunststoff-Material des Trägers derart durchdrungen ist, dass die äußerste Trägerschicht die Verstärkung in Form von flachen Erhebungen bedeckt, deren Fläche größer ist als die der umschlossenen Zwischenräume der durchbrochenen Lage.

Gemäß der Erfindung wird als Verstärkung eine in das Trägermaterial eingebundene bzw. eingebettete Lage gewählt, welche sowohl durch ihre Struktur als auch durch ihre Einbettung das Ablösen von Träger-Bruchstücken, die sich beim Öffnen der Klappe(n) bilden können, wirkungsvoll verhindert.

Auf diese Weise durchdringt das Kunststoffmaterial die Verstärkungslage und bildet am Träger eine Struktur aus flachen Erhebungen, welche die Verstärkungslage überdecken, aus. Damit ist die Verstärkung derart in das Trägermaterial eingebettet, dass sie sich nicht ablösen kann und ein Absplittern von sich beim Öffnen der Klappe bildenden Bruchstücken des Trägermaterials wirkungsvoll verhindert.

Die Erhebungen in der Trägerschicht bzw. die flachen Vertiefungen in der Spritzgußform werden bezüglich ihrer Größe so gewählt, dass ihre Fläche größer ist als jene der Einzelelemente, der umschlossenen Zwischenräume bzw. Maschen, der durchbrochenen Lage bzw. des Netzes oder Gewebes. Damit ist gewährleistet, dass sich die durchbrochene Lage bzw. das Netz oder Gewebe einwandfrei in die Trägerschicht einbetten läßt.

Bei einer bevorzugten Ausführungsform der Erfindung ist die durchbrochen ausgeführte und flexible Lage ein grobmaschiges Netz oder Gewebe. Ein Netz oder Gewebe läßt sich bei der Herstellung des Trägers besonders leicht handhaben, ist in verschiedenen Ausführungen leicht herstellbar und sehr wirkungsvoll.

Die Erhebungen sollten, ebenfalls um eine gute Einbettung der Verstärkungslage zu unterstützen, an die Struktur derselben weitgehend angepaßt sein und vorzugsweise ein gleichmäßiges Muster, insbesondere aus Rauten oder Quadraten, bilden.

Eine gute Einbettung der durchbrochen ausgeführten Lage wird auch dann unterstützt, wenn sie derart eingebracht wird, daß die Materialverbindungen zwischen den Durchbrechungen zumindest großteils in kreuzender Anordnung zu den Erhebungen der Trägerschicht bzw. den Vertiefungen der Spritzgußform verlaufen. Bei einem Netz oder Gewebe ist dies insbesondere dann der Fall, wenn es derart eingebracht wird, daß seine Fäden zu den Erhebungen bzw. Vertiefungen diagonal verlaufen.

Die Verstärkung erstreckt sich insbesondere auch über die Verbindungsstellen zu einem mit der Instrumententafel zu verbindenden Schußkanal. Um eine gute Verbindung dieser Kunststoffteile durch Verschweißen zu gewährleisten, werden am Träger Schweißrippen ausgebildet, die an ihrer Oberseite schmale, die Schweißstellen bildende Stege aufweisen. Die Stege werden insbesondere so ausgebildet, daß sie in der Längsrichtung oder auch quer zur Längserstreckung der Schweißrippen verlaufen. Die Verstärkung bettet sich bei der Herstellung des Trägers unterhalb der Stege ein und es kann eine feste und dauerhafte Verschweißung zwischen den Stegen und dem Schußkanal erfolgen.

Für eine optimale Wirkung der Verstärkungslage ist es von Vorteil, wenn sie sich über den oder die Scharnierbereich(e) des bzw. der klappenartig aufreißbaren Teils bzw. Teile erstreckt und vorzugsweise zumindest teilweise auch über die Aufreißlinien verläuft.

Von besonderem Vorteil ist ferner eine besondere erfindungsgemäße Ausgestaltung des Trägers im Scharnierbereich. Dieser wird nämlich hier mit einer Nut versehen, durch die die Stärke der Instrumententafel verringert wird. Diese Nut gewährleistet eine weitgehend ungehinderte, das Trägermaterial nicht unnötig beanspruchende Öffnungsbewegung des klappenartig aufreißbaren Teils.

Um den Aufklappvorgang nicht zu behindern, ist es weiter von Vorteil, wenn die durchbrochen ausgeführte Lage eine über den Scharnierbereich hinweg sich erstreckende, beim Aufklappen des klappenartig aufreißbaren Teils auffaltbare wellenförmige Schwenkpartie aufweist. Eine weitere Verbesserung wird dadurch erzielt, daß die Schwenkpartie durch mehrere aneinander anschließende Wellen der durchbrochen ausgeführten Lage gebildet ist.

Gemäß einer weiteren Variante der Erfindung umfaßt eine Instrumententafel für ein Kraftfahrzeug einen formstabilen Kunststoffträger, eine Deckschicht sowie gegebenenfalls eine vorzugsweise geschäumte Zwischenschicht, mit zumindest einem klappenartig aufreißbaren Aufreißteil für den Airbag eines Airbagmoduls, wobei der Aufreißteil durch Aufreißlinien und einen Scharnierbereich definiert und mit einer Verstärkung versehen ist, wobei die Verstärkung aus zumindest einer gitterförmig durchbrochenen flexiblen Armierungslage besteht, welche vom Material des Kunststoffträgers durchdrungen ist, wobei der Kunststoffträger die Armierungslage in Form eines erhabenen Gitternetzes überdeckt.

Weitere Merkmale, Vorteile und Einzelheiten der Erfindung werden nun anhand der Zeichnung, die schematische Darstellungen eines Ausführungsbeispieles der Erfindung zeigt, näher beschrieben. Dabei zeigen
Fig. 1 einen Querschnitt durch eine Instrumententafel in jenem Bereich, wo zwei klappenartig aufreißbare Teile ausgebildet sind,
Fig. 2 eine Innenansicht der Instrumententafel aus Fig. 1, wobei zum Teil die äußerste Schicht weggelassen wurde, so daß eine unterhalb derselben angeordnete Verstärkungslage zu sehen ist,
Fig. 3 eine vergrößerte Ansicht des Details A aus Fig. 1,
Fig. 4 eine Ansicht der Innenseite der Instrumententafel im Bereich von Schweißrippen, und
Fig. 5 eine weitere Ausführungsform einer Instrumententafel entsprechend der Darstellung in Fig. 1.

Die in den Zeichnungsfiguren dargestellte Instrumententafel weist einen üblichen Aufbau mit einem an ihrer Innenseite verlaufenden Träger 1, einer Deckschicht 2 und einer dazwischen befindlichen Schaumstoffschicht 3 auf, die den Träger 1 mit der Deckschicht 2 verbindet. Ein mit dem Träger 1 verbundenes Kunststoffteil bildet in herkömmlicher Weise einen Schußkanal 6 für den sich mit Gas befüllenden Airbag eines nicht dargestellten Airbagmoduls. Der Träger 1 ist ein formstabiles Kunststoffteil, das insbesondere im Spritzguß hergestellt ist. Die Deckschicht 2 besteht beispielsweise ebenfalls aus einem Kunststoff und kann in einem Slush-Verfahren oder in einem Sprühverfahren hergestellt werden. Die Verbindung zwischen der Deckschicht 2 und dem Träger 1 erfolgt derart, daß die beiden bereits fertigen Teile in ein Schaumwerkzeug eingelegt werden und ihr Zwischenraum mit Schaum gefüllt wird.

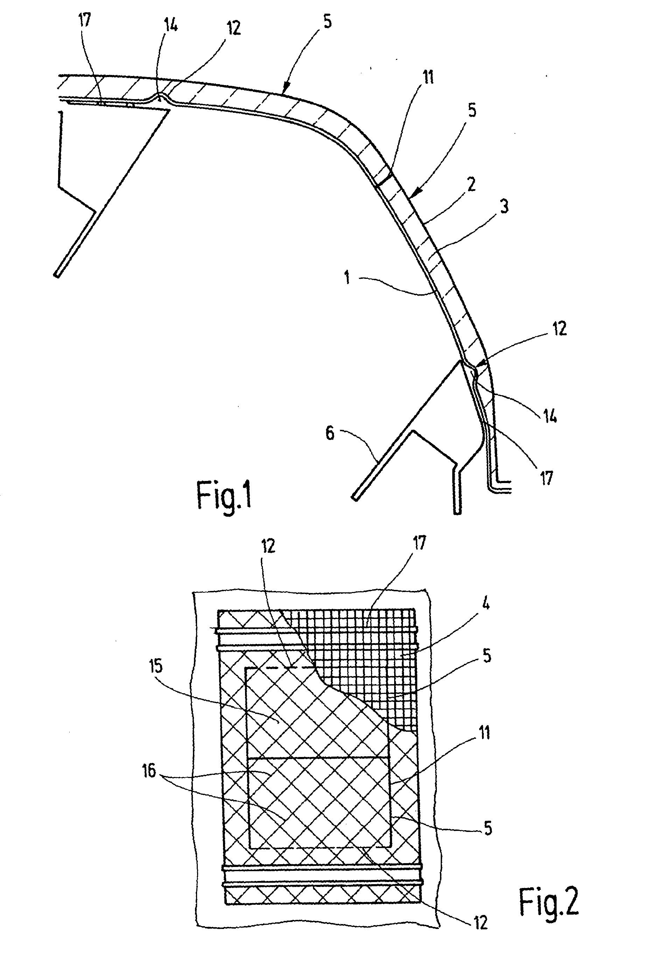

Wie Fig. 1 in Verbindung mit Fig. 2 zeigt, bilden bei der dargestellten Ausführungsform H-förmig verlaufende Aufreißlinien 11 gemeinsam mit zwei Scharnierbereichen 12 zwei klappenartig aufreißbare Teile 5. Die Aufreißlinien 11 werden von Materialschwächungen gebildet, die bei der dargestellten Ausführungsform von der Unterseite der Instrumententafel mittels eines Lasers oder eines Messers durchgeführte Einschnitte sind. Um die Lage der Scharnierbereiche 12, die jeweils zwischen den zwei freien Enden der Aufreißlinien 11 verlaufen, zu definieren, ist der Träger 1 in diesen Bereichen unter Bildung einer Nut 14 geformt, so daß hier die Schaumstoffschicht 3 zwischen der Deckschicht 2 und dem Träger 1 eine deutlich verminderte Dicke aufweist. Die Nuten 14 werden bei Herstellung des Trägers 1 mitgeformt, wobei die Schichtdicke des Trägermaterials im Bereich der Nuten 14 etwas größer sein kann als außerhalb der Nuten 14. Die Nuten 14 werden bevorzugt so ausgestaltet, daß ihre Flanken relativ flach verlaufen, wobei die Flankenwinkel unterschiedlich groß sein können. Die Nuten 14 gewährleisten eine weitgehend ungehinderte, das Trägermaterial nicht unnötig beanspruchende Öffnungsbewegung für die beiden klappenartig aufreißbaren Teile 5. Somit werden auf einfache Weise nicht nur Scharnierbereiche 12 geschaffen sondern es werden auch Kraft intensive Materialbeanspruchungen in diesen Bereichen vermieden.

Im Träger 1 ist eine Verstärkung eingebunden bzw. eingebettet, die erfindungsgemäß von zumindest einer durchbrochen ausgeführten und flexiblen Lage gebildet wird. Diese Lage ist bevorzugt ein grobmaschiges Netz oder Gewebe 4. Das Netz oder Gewebe 4 ist insbesondere so aufgebaut, daß es zwei einander unter einem Winkel von etwa 90° kreuzende Fadenscharen aufweist. Bei einem Gewebe sind dies die miteinander verwobenen Kett- und die Schußfäden. Als Ausgangsmaterial für das Netz bzw. Gewebe 4 kommen beispielsweise Fäden aus einem dehnungsresistenten Kunststoff in Frage.

Das grobmaschige Netz oder Gewebe 4 überdeckt insbesondere den gesamten Bereich der klappenartig aufreißbaren Teile 5 und die diese umgebenden Bereiche. Bei der dargestellten Ausführungsform erstreckt sich das Netz oder Gewebe 4 somit auch über die Aufreißlinie 11, die beiden Scharnierbereiche 12 und die jenseits der Scharnierbereiche 12 verlaufenden und von Schweißrippen 17 gebildeten Verbindungsstellen zwischen dem Schußkanal 6 und dem Träger 1. In diesem Fall reißt das Netz oder Gewebe 4 beim Aufgehen der Teile 5 im Bereich der Aufreißlinien 11 durch. Alternativ dazu kann auch vorgesehen werden, daß das grobmaschige Netz oder Gewebe 4 zwar über zumindest den Großteil der Flächen der klappenartig aufreißbaren Teile 5 und über die beiden Scharnierbereiche 12 hinaus verläuft, sich jedoch nur im Bereich zwischen den seitlich verlaufenden Aufreißlinien 11 erstreckt.

Wie aus Fig. 2 zu sehen ist, ist das grobmaschige Netz oder Gewebe 4 an der Innenseite des Trägers 1 in das Kunststoffmaterial derart eingebunden, daß es von einer Trägermaterialschicht bedeckt ist, die sich hier aus rauten- bzw. quadratförmigen Erhebungen 15 zusammensetzt, die durch gitterartig angeordnete Vertiefungen 16 voneinander getrennt sind. Die von den Erhebungen 15 und den diese begrenzenden Vertiefungen 16 gebildete Struktur ist wesentlich größer als die Struktur des grobmaschigen Netzes oder Gewebes 4. Das heißt, daß die Einzelelemente des Netzes oder Gewebes 4 eine kleinere Fläche beanspruchen als die Einzelelemente am Träger 1, die rautenförmigen Erhebungen 15. Fig. 2 zeigt diese Ausgestaltung, wobei im rechten oberen Teil dieser Zeichnungsfigur zur Verdeutlichung der geschilderten Ausgestaltung die Erhebungen 15 am Träger 1 weggelassen wurden. Zu erkennen ist auch, daß das grobmaschige Netz oder Gewebe 4 diagonal zu den gitterförmig verlaufenden Vertiefungen 16 im Träger 1 orientiert ist.

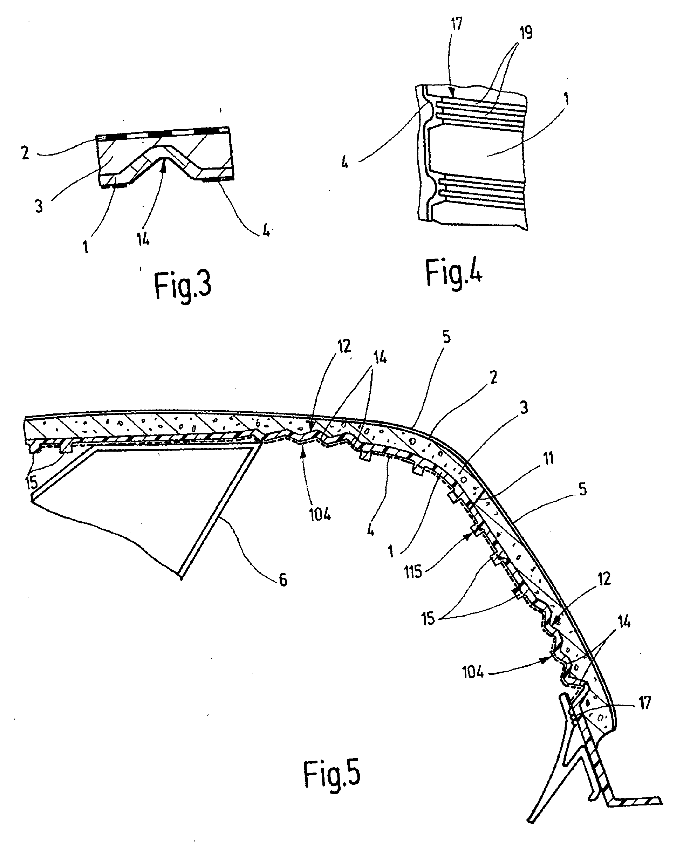

Die durch Erhebungen 15 und Vertiefungen 16 an der Innenseite des Trägers 1 gebildete Struktur ist durch die Schweißrippen 17 unterbrochen. Wie Fig. 1 und Fig. 2 zeigen, sind zur Verbindung des Trägers 1 mit dem Schußkanal 6 außenseitig der Scharnierbereiche 12 am Träger 1 je zwei Schweißrippen 17 ausgebildet, die jeweils geringfügig voneinander beabstandet parallel zum Scharnierbereich 12 verlaufen und sich vorzugsweise zumindest über die Breite des Netzes oder Gewebes 4 erstrecken. Die Schweißrippen 17 werden bei der Herstellung des Trägers 1 in einer Spritzgußform mitgeformt. Eine bevorzugte Ausführung eines Paares von Schweißrippen 17 zeigt Fig. 4. Die in einer übereinstimmender Stärke in der Größenordnung von 2 bis 3 mm und einer Breite von 5 bis 9 mm ausgebildeten Schweißrippen 17 sind an ihrer Oberseite strukturiert, indem hier durch schmale Nuten 18 voneinander beabstandete in der Längsrichtung verlaufende Stege 19 vorgesehen sind, deren Oberseiten die Schweißstellen bilden.

In der Spritzgußform zur Herstellung des Trägers 1 ist an den betreffenden Flächen die Negativstruktur zur geschilderten Innenseitenstruktur des Trägers 1 vorgesehen ist. Das heißt, daß rauten- oder quadratförmige Vertiefungen in der Form ausgebildet werden, die durch gitterförmig verlaufende Stege begrenzt sind. Entsprechend gestaltete Erhebungen bilden die Scharnierbereiche 12, entsprechend geformte Vertiefungen bilden die Schweißrippen 17 aus. Auf diese Bereiche wird das grobmaschige Netz oder Gewebe 4 vor dem Einbringen des Kunststoffmaterials gelegt. Wird nun das flüssige Kunststoffmaterial eingespritzt, so durchdringt es das Netz oder Gewebe 4 im Bereich der rautenförmigen Vertiefungen unter Bildung der Erhebungen 15. Im Bereich der die Schweißrippen 17 formenden Vertiefungen durchdringt der Kunststoff das Netz oder Gewebe 4, so daß die Nuten, die die Längsstege 19 formen, nur mit Kunststoff befüllt werden.

An der fertig gestellten Instrumententafel wird der Schußkanal 6 an den Schweißrippen 17 durch Vibrationsschweißen fest verbunden.

Fig. 5 zeigt ein weiteres Ausführungsbeispiel einer Instrumententafel, wobei mit der vorstehend beschriebenen Ausführungsform identische oder funktionsgleiche Teile mit den gleichen Bezugszeichen versehen sind. Eine Besonderheit besteht darin, daß das Material des Trägers 1 das Gewebe bzw. die Armierungslage 4 in Form eines erhabenen Gitternetzes 115 außenseitig überdeckt. Die von dem Gitternetz 115 gebildete Struktur ist dabei komplementär zu der in Fig. 2 gezeigten Trägerschicht ausgebildet, d. h. die gitterartig angeordneten linienförmigen Erhebungen 15 begrenzen dazwischenliegende rauten- bzw. quadratförmige Vertiefungen, in denen das Gewebe 4 frei gegen den Träger 1 anliegt.

Um den Aufklappvorgang nicht zu behindern, besitzt die Armierungslage 4 in den Scharnierbereichen 12 eine auffaltbare Wellenpartie 104. Die Wellenpartie 104 wird durch mehrere aneinander anschließende Wellen gebildet, die gegen entsprechende Nuten 14 der Schwenkpartie anliegen. Dieser Bereich ist von dem Gitternetz 115 freigehalten, so daß die Wellen der Armierungslage 4 beim Aufklappen in Schwenkrichtung der Teile 5 ungehindert streckbar sind.

Im Träger 1 ist die Verstärkung derart eingebunden bzw. eingebettet, daß wirkungsvoll ein Ablösen der Verstärkung vom Trägermaterial beim Auslösen des Airbags verhindert ist. Die Verstärkung kann somit gewährleisten, daß kein Absplittern von Bruchstücken von Trägermaterial beim Aufreißen der Klappen 5 durch den sich aufblasenden Airbag erfolgt.

Die Erfindung ist auf die dargestellte Ausführungsform nicht eingeschränkt. Insbesondere kann die Verstärkungslage eine vorzugsweise mit regelmäßig verteilten Durchbrechungen versehene Folie oder eine auf andere Weise mit Löchern, Durchbrechungen etc. versehene Lage aus geeignetem Material sein. Die Schweißrippen können an Stelle von Längsstegen auch mit Querstegen oder mit schräg verlaufenden Stegen versehen werden. Möglich ist es auch, jeweils lediglich eine Schweißrippe vorzusehen, die derart auszuführen ist, daß die erforderliche feste Verbindung zum Schußkanal sichergestellt ist. Es können ferner die Aufreißlinien abweichend ausgeführt sein, beispielsweise lediglich im Träger oder in der Deckschicht vorgesehene Einschnitte oder Perforationen sein. An Stelle einer H-Form, wodurch zwei Klappen gebildet werden, kann auch eine U-Form, die eine Klappe bildet, vorgesehen werden. Die Aufreißlinien können auch durch bei der Herstellung des Trägers und/oder der Deckschicht mitgeformte Materialschwächungen gebildet werden. Die Erhebungen an der Trägeraußenseite können abweichend gestaltet werden.

## Patentansprüche

1. Instrumententafel für ein Kraftfahrzeug, aus einem formstabilen Kunststoffträger, einer Deckschicht sowie gegebenenfalls einer aus Schaumstoff oder dergleichen bestehenden Schicht, mit zumindest einem klappenartig aufreißbaren Teil für den Airbag eines Airbagmoduls, wobei das klappenartig aufreißbare Teil durch Aufreißlinien und einen Scharnierbereich definiert ist und mit einer Verstärkung versehen ist, wobei die Verstärkung aus zumindest einer durchbrochen ausgeführten Lage (4) besteht, **dadurch gekennzeichnet, dass** die durchbrochen ausgeführte und flexible Lage (4) vom eingespritzten Kunststoff-Material des Trägers (1) derart durchdrungen ist, dass die äußerste Trägerschicht die Lage (4) in Form von flachen Erhebungen (15) bedeckt, deren Fläche größer ist als die der umschlossenen Zwischenräume der durchbrochenen Lage (4).

2. Instrumententafel nach Anspruch 1, **dadurch gekennzeichnet, dass** die durchbrochen ausgeführte und flexible Lage ein grobmaschiges Netz oder Gewebe (4) ist.

3. Instrumententafel nach Anspruch 1 oder 2, **dadurch gekennzeichnet, dass** die Erhebungen (15) an die Struktur der durchbrochenen Lage (4) angepasst sind und vorzugsweise ein gleichmäßiges Muster, insbesondere aus Rauten bzw. Quadraten, bilden.

4. Instrumententafel nach einem der Ansprüche 1 bis 3, **dadurch gekennzeichnet, dass** die durchbrochene Lage (4) derart eingebracht ist, dass die Materialverbindungen zwischen den Durchbrechungen zumindest großteils in kreuzender Anordnung zu den Erhebungen (15) sind.

5. Instrumententafel nach einem der Ansprüche 2 bis 4, **dadurch gekennzeichnet, dass** das Netz bzw. Gewebe (4) derart eingebracht ist, dass seine Fäden zu den Erhebungen (15) diagonal verlaufen.

6. Instrumententafel nach einem der Ansprüche 1 bis 5, **dadurch gekennzeichnet, dass** sich die Verstärkung über Verbindungsstellen zu einem Schusskanal (6) erstreckt, wobei der Träger (1) mit Schweißrippen (17) versehen ist, die schmale, die Schweißstellen bildende Stege (19) aufweisen.

7. Instrumententafel nach Anspruch 6, **dadurch gekennzeichnet, dass** die Stege (19) entlang der oder quer zur Längserstreckung der Schweißrippen (17) verlaufen.

8. Instrumententafel nach einem der Ansprüche 1 bis 7, **dadurch gekennzeichnet, dass** sich die durchbrochen ausgeführte Lage (4) über den oder die Schamierbereich(e) (12) des bzw. der klappenartig aufreißbaren Teils bzw. Teile (5) erstreckt.

9. Instrumententafel nach einem der Ansprüche 1 bis 8, **dadurch gekennzeichnet, dass** sich die durchbrochene ausgeführte Lage (4) zumindest teilweise über die Aufreißlinien (11) erstreckt.

10. Instrumententafel nach einem der Ansprüche 1 bis 9, **dadurch gekennzeichnet, dass** der Träger (1) im Scharnierbereich (12) mit mindestens einer die Stärke der Instrumententafel von der Innenseite her verringernden Nut (14) versehen ist.

11. Instrumententafel nach einem der Ansprüche 1 bis 10, **dadurch gekennzeichnet, dass** die durchbrochen ausgeführte Lage (4) eine über den Scharnierbereich (12) hinweg sich erstreckende, beim Aufklappen des klappenartig aufreißbaren Teils (5) auffaltbare wellenförmige Schwenkpartie aufweist.

12. Instrumententafel nach Anspruch 11, **dadurch gekennzeichnet, dass** die Schwenkpartie durch mehrere aneinander anschließende Wellen der durchbrochen ausgeführten Lage (4) gebildet ist.

13. Instrumententafel für ein Kraftfahrzeug, umfassend einen formstabilen Kunststoffträger (1), eine Deckschicht (2) sowie gegebenenfalls eine vorzugsweise geschäumte Zwischenschicht (3), mit zumindest einem klappenartig aufreißbaren Aufreißteil (5) für den Airbag eines Airbagmoduls, wobei der Aufreißteil (5) durch Aufreißlinien (11) und einen Scharnierbereich (12) definiert ist und mit einer Verstärkung (4) versehen ist, **dadurch gekennzeichnet, dass** die Verstärkung aus zumindest einer gitterförmig durchbrochenen flexiblen Armierungslage (4) besteht, welche vom eingespritzten Kunststoff Material des Kunststoffträgers (1) durchdrungen ist, wobei der Kunststoffträger (1) die Armierungslage (4) in Form eines erhabenen Gitternetzes (115) überdeckt.

## Claims

1. Instrument panel for a motor vehicle, consisting of a dimensionally stable plastic carrier, of a covering layer and, if appropriate, of a layer consisting of foam or the like, with at least one part, capable of being torn open in a flap-like manner, for the airbag of an airbag module, the part capable of being torn open in a flap-like manner being defined by tear-open lines and a hinge region and being provided with reinforcement, the reinforcement consisting of at least one ply (4) of perforated type, **characterized in that** the flexible ply (4) of perforated type is penetrated by the injected plastic material of the carrier (1) in such a way that the outermost carrier layer covers the ply (4) in the form of flat elevations (15), the area of which is larger than that of the enclosed interspaces of the perforated ply (4).

2. Instrument panel according to Claim 1, **characterized in that** the flexible ply of perforated type is a coarse-mesh netting or fabric (4).

3. Instrument panel according to Claim 1 or 2, **characterized in that** the elevations (15) are adapted to the structure of the perforated ply (4) and preferably form a uniform pattern consisting, in particular, of diamonds or squares.

4. Instrument panel according to one of Claims 1 to 3, **characterized in that** the perforated ply (4) is introduced in such a way that the material connections between the perforations are at least to a great extent in an intersecting arrangement with the elevations (15).

5. Instrument panel according to one of Claims 2 to 4, **characterized in that** the netting or fabric (4) is introduced in such a way that its threads run diagonally with respect to the elevations (15).

6. Instrument panel according to one of Claims 1 to 5, **characterized in that** the reinforcement extends via connection points to a shooting duct (6), the carrier (1) being provided with welded ribs (17) which have narrow webs (19) forming the welding points.

7. Instrument panel according to Claim 6, **characterized in that** the webs (19) run along or transversely with respect to the longitudinal extent of the welded ribs (17).

8. Instrument panel according to one of Claims 1 to 7, **characterized in that** the ply (4) of perforated type extends over the hinge region or hinge regions (12) of the part or parts (5) capable of being torn open in a flap-like manner.

9. Instrument panel according to one of Claims 1 to 8, **characterized in that** the ply (4) of perforated type extends at least partially over the tear-open lines (11).

10. Instrument panel according to one of Claims 1 to 9, **characterized in that** the carrier (1) is provided in the hinge region (12) with at least one groove (14) reducing the thickness of the instrument panel from the inside.

11. Instrument panel according to one of Claims 1 to 10, **characterized in that** the ply (4) of perforated type has a wavy pivoting portion which extends beyond the hinge region (12) and which can be folded open when the part (5) capable of being torn open in a flap-like manner is swung up.

12. Instrument panel according to Claim 11, **characterized in that** the pivoting portion is formed by a plurality of waves of the ply (4) of perforated type which adjoin one another.

13. Instrument panel for a motor vehicle, comprising a dimensionally stable plastic carrier (1), a covering layer (2) and, if appropriate, a preferably foamed intermediate layer (3), with at least one tear-open part (5), capable of being torn open in a flap-like manner, for the airbag of an airbag module, the tear-open part (5) being defined by tear-open lines (11) and a hinge region (12) and being provided with a reinforcement (4), **characterized in that** the reinforcement consists of at least one flexible reinforcing ply (4) which is perforated in a grid-like manner and which is penetrated by the injected plastic material of the plastic carrier (1), the plastic carrier (1) covering the reinforcing ply (4) in the form of a raised grid netting (115).

## Revendications

1. Tableau de bord pour un véhicule automobile, constitué d'un support indéformable en matière plastique, d'une couche de protection et éventuellement d'une couche composée de mousse ou équivalent, comprenant au moins une partie pouvant s'ouvrir brusquement à la manière d'un clapet pour le coussin gonflable de sécurité d'un module à coussin gonflable de sécurité, la partie pouvant s'ouvrir brusquement à la manière d'un clapet étant définie par des lignes d'ouverture et une zone de charnière et étant munie d'un renfort, le renfort se composant d'au moins une couche (4) ajourée, **caractérisé en ce que** la couche (4) ajourée et souple est imprégnée de la matière plastique du support (1) de telle sorte que la couche porteuse extérieure recouvre la couche (4) sous la forme de bossages plats (15) dont la surface est supérieure à celle des espaces intermédiaires clos de la couche (4) ajourée.

2. Tableau de bord selon la revendication 1, **caractérisé en ce que** la couche ajourée et souple est un filet ou un tissu (4) à grosses mailles.

3. Tableau de bord selon la revendication 1 ou 2, **caractérisé en ce que** les bossages (15) sont adaptés à la structure de la couche ajourée (4) et forment de préférence un modèle régulier, notamment constitué de losanges ou de carrés.

4. Tableau de bord selon l'une des revendications 1 à 3, **caractérisé en ce que** la couche ajourée (4) est insérée de telle sorte que les assemblages de matière entre les évidements sont au moins en majeure partie disposés en croix par rapport aux bossages (15).

5. Tableau de bord selon l'une des revendications 2 à 4, **caractérisé en ce que** le filet ou le tissu (4) est inséré de telle sorte que ses fils s'étendent diagonalement par rapport aux bossages (15).

6. Tableau de bord selon l'une des revendications 1 à 5, **caractérisé en ce que** le renfort s'étend sur des points de liaison vers un canal d'éjection (6), le support (1) étant muni d'ailettes de soudage (17) qui présentent des nervures (19) étroites formant les points de soudage.

7. Tableau de bord selon la revendication 6, **caractérisé en ce que** les nervures (19) s'étendent le long ou transversalement par rapport à la projection longitudinale des ailettes de soudage (17).

8. Tableau de bord selon l'une des revendications 1 à 7, **caractérisé en ce que** la couche (4) ajourée s'étend au-dessus de la ou des zones de charnière (12) de la ou des parties (5) pouvant s'ouvrir brusquement à la manière d'un clapet.

9. Tableau de bord selon l'une des revendications 1 à 8, **caractérisé en ce que** la couche (4) ajourée s'étend au moins partiellement au-dessus des lignes d'ouverture (11).

10. Tableau de bord selon l'une des revendications 1 à 9, **caractérisé en ce que** le support (1) est muni dans la zone de charnière (12) d'au moins une rainure (14) qui réduit l'épaisseur du tableau de bord à partir de l'intérieur.

11. Tableau de bord selon l'une des revendications 1 à 10, **caractérisé en ce que** la couche ajourée (4) présente une partie pivotante de forme ondulée qui s'étend au-delà de la zone de charnière (12) et qui se déploie lors de l'ouverture de la partie pouvant s'ouvrir brusquement à la manière d'un clapet.

12. Tableau de bord selon la revendication 11, **caractérisé en ce que** la partie pivotante est formée par plusieurs ondulations juxtaposées les unes aux autres de la couche ajourée (4).

13. Tableau de bord pour un véhicule automobile, comprenant un support indéformable en matière plastique (1), une couche de protection (2) et éventuellement une couche intermédiaire (3) de préférence en mousse, comprenant au moins une partie (5) pouvant s'ouvrir brusquement à la manière d'un clapet pour le coussin gonflable de sécurité d'un module à coussin gonflable de sécurité, la partie (5) pouvant s'ouvrir brusquement à la manière d'un clapet étant définie par des lignes d'ouverture (11) et une zone de charnière (12) et étant munie d'un renfort (4), **caractérisé en ce que** le renfort se compose d'au moins une couche d'armature (4) souple ajourée en forme de grille, laquelle est imprégnée de la matière plastique injectée du support en matière plastique (1), le support en matière plastique (1) recouvrant la couche d'armature (4) sous la forme d'un filet quadrillé (115) bosselé.
